# EUROPÄISCHE PATENTSCHRIFT

(11) **EP 1 336 735 B1**
(45) Veröffentlichungstag und Bekanntmachung des Hinweises auf die Patenterteilung: **19.10.2005**
(21) Anmeldenummer: 02450261.9
(22) Anmeldetag: 14.11.2002
(51) Int. Cl.: F02B 29/04, F01P 3/18, F02B 37/013

(54) **Kühlsystem für eine Brennkraftmaschine**
Cooling system for an internal combustion engine
Système de refroidissement pour un moteur à combustion interne

(30) Priorität: 14.02.2002 AT 932002 U
(43) Veröffentlichungstag der Anmeldung: 20.08.2003
(73) Patentinhaber: AVL List GmbH, 8020 Graz (AT)
(72) Erfinder: ROITHINGER, Robert, Ing., A-4300 St. Valentin (AT)
(74) Vertreter: Babeluk, Michael

(56) Entgegenhaltungen:
- EP-A- 0 496 085
- GB-A- 182 787
- PATENT ABSTRACTS OF JAPAN vol. 009, no. 249 (M-419), 5. Oktober 1985 (1985-10-05) & JP 60 101223 A (YANMAR DIESEL KK), 5. Juni 1985 (1985-06-05)
- PATENT ABSTRACTS OF JAPAN vol. 2002, no. 03, 3. April 2002 (2002-04-03) & JP 2001 329849 A (ISUZU MOTORS LTD), 30. November 2001 (2001-11-30)

## Beschreibung

Die Erfindung betrifft ein Kühlsystem für eine Brennkraftmaschine mit zweistufiger Aufladung, mit einer Ladeluftleitung, in welcher ein erster Verdichter eines ersten Abgasturboladers und stromabwärts dieses ein zweiter Verdichter eines zweiten Abgasturboladers angeordnet ist, wobei zwischen dem ersten und dem zweiten Verdichter ein erster Ladeluftkühler und stromabwärts des zweiten Verdichters ein zweiter Ladeluftkühler angeordnet ist.

Aus der JP 62-085123 A ist ein Kühlsystem einer Brennkraftmaschine mit zweistufiger Aufladung der eingangs genannten Art bekannt. Durch den ersten Ladeluftkühler zwischen dem ersten und dem zweiten Verdichter kann die Ladelufttemperatur so weit abgesenkt werden, dass keine thermische Überlastung des zweiten Verdichters auftritt. Bei dem bekannten Kühlsystem ist allerdings keine Regelung des Ladezustandes in Abhängigkeit des Betriebszustandes vorgesehen. Dies hat den Nachteil, dass die Abgasturbolader nicht immer mit optimalem Wirkungsgrad betrieben werden können. Ein ähnliches Kühlsystem ist auch aus der DE 199 48 220 A1 bekannt.

Aus der DE 39 33 518 A1 ist eine Brennkraftmaschine mit sequentiellem Turboladersystem mit einem erststufigen, großvolumigen Turbolader und einem zweitstufigen, kleinvolumigen Turbolader bekannt. Mittels eines Ansaug-Umgehungsventils kann der zweitstufige, kleinvolumige Turbolader umgangen werden. In dem bekannten Kühlsystem ist ein Ladeluftkühler stromabwärts des ersten Verdichters, aber kein Zwischenkühler zwischen dem ersten und dem zweiten Verdichter vorgesehen. Durch die hohe Austrittstemperatur aus dem ersten Verdichter wird der zweite Verdichter, insbesondere das Verdichterlaufrad, thermisch hoch belastet, insbesondere dann, wenn ein konventionelles, gegossenes Aluminiumverdichterrad zur Anwendung kommt. Bei konventionellen Aluminiumverdichterlaufrädern kann es infolge zu hoher Betriebstemperatur zur sogenannten Problematik der Low-Cycle-Fatigue kommen. Beim Hochdrehen des Verdichterlaufrades entstehen Zuspannungen im Nabenbereich. Bei Reduktion der Drehzahl kommt es in Folge von Spannungsumlagerungen im Nabenbereich zu Druckspannungen. Diese schwellende Belastung verursacht bei einer bestimmten Zykluszahl bei kritischer Auslegung eine Zerstörung des Laufrades. Durch die Zwischenkühlung kann dies verhindert werden. Ähnliche Kühlsysteme zeigen die US 5,020,327 A, die US 5,142,866 A und die US 5,408,979 A.

Die US 5,492,167 A offenbart ein Kühlsystem mit einem Flüssigkeitskühler und einem Ladeluftkühler, welcher vor den Flüssigkeitskühler geklappt werden kann.

Die JP 2000-120 439 A zeigt eine Kühleranordnung für eine Brennkraftmaschine, bei der ein Zwischenkühler vor einem Flüssigkeitskühler angeordnet ist.

Aus der US 6,029,345 A ist ein Kühlsystem für ein Motorfahrzeug mit einem Kondensator, einem Ladeluftkühler und einem Radiator bekannt. Kondensator und Ladeluftkühler sind, in Strömungsrichtung der Kühlluft, vor dem Radiator angeordnet.

Bei konventionellen Kühlsystemen sind Ladeluft- oder Kühlflüssigkeitskühler fahrzeugfest montiert. Dies erfordert, dass flexible Elemente in den Ladeluftleitungen und/oder in den Kühlleitungen vorgesehen werden müssen, welche Relativbewegungen zwischen dem Motor und dem Fahrgestell kompensieren. Zudem sind flexible Elemente und/oder entsprechend große Abstände zwischen dem Ventilatorgehäusemantel und dem Motor erforderlich. Die Veröffentlichungen US 4,213,426 A und US 4,774,911 A offenbaren derartige Kühlsysteme.

Aus der US 5,597,047 A ist ein Kühlsystem mit einem Flüssigkeitskühler bekannt, der auf einem motorfesten Rahmen montiert ist. Zwischen diesem am Motor befestigten Rahmen und dem Flüssigkeitskühler sind Dämpfungselemente angeordnet. Derartige motorfeste Kühleinrichtungen haben den Vorteil, dass die Verbindungsleitungen kurz ausgebildet sein können.

Aufgabe der Erfindung ist es, ein leistungsfähiges Kühlsystem für eine Brennkraftmaschine zu entwickeln, welches platzsparend ist, sowie wenig Gewicht, wenige Bauteile und eine hohe Standzeit aufweist.

Erfindungsgemäß wird dies dadurch erreicht, dass zumindest einer der beiden Ladeluftkühler, in Anströmrichtung der Kühlluft betrachtet, stromaufwärts des Kühlmittelkühlers angeordnet ist, und dass der zweite Ladeluftkühler über oder neben dem ersten Ladeluftkühler angeordnet ist. Dadurch, dass die Ladeluftkühler dem Flüssigkeitskühler vorgelagert sind, kann Bauraum eingespart werden und eine besonders gute Kühlung der Ladeluft erreicht werden.

Durch die zweistufige Auslegung der Aufladung können relativ günstige Materialien verwendet werden. Durch den ersten Ladeluftkühler wird erreicht, dass die Ladelufttemperatur zwischen den beiden Verdichtern so weit absinkt, dass auch beim zweiten Verdichter ein konventionelles, gegossenes Aluminiumverdichterrad zur Anwendung kommen kann, ohne mit zu hoher Eintrittstemperatur in den zweiten Verdichter die Lebensdauer des Verdichterrades zu beeinträchtigen. Somit wird auch die Problematik der Low-Cycle-Fatigue des Kompressorrades verhindert.

Dadurch, dass der zweite Ladeluftkühler über dem ersten Ladeluftkühler angeordnet ist, kann Bauraum eingespart und eine optimale Kühlung der Ladeluft erreicht werden.

In einer besonders bevorzugten Ausführungsvariante ist vorgesehen, dass bei zumindest einem Ladeluftkühler, vorzugsweise beim ersten Ladeluftkühler, Kühlereintritt und Kühleraustritt auf der selben Seite - bezogen auf eine in Richtung der anströmenden Kühlluft durch den Schwerpunkt des Ladeluftkühlers verlaufenden Hochebene - angeordnet sind. Dabei ist es besonders vorteilhaft, wenn zumindest ein Ladeluftkühler, vorzugsweise der erste Ladeluftkühler, eine vorzugsweise durch den Schwerpunkt verlaufende Trennwand zwischen eintretendem und austretendem Ladeluftstrom aufweist, so dass ein im Wesentlichen U-förmiger Strömungsweg für die den Ladeluftkühler durchströmende Ladeluft gebildet ist. Dadurch kann die Ladeluftleitung zwischen dem ersten Ladeluftkühler und dem zweiten Kompressor sehr kurz ausgebildet werden, wodurch Material eingespart und Strömungsverluste vermindert werden können.

In einer besonders günstigen Ausführung der Erfindung ist vorgesehen, dass die aus erstem und zweitem Ladeluftkühler und dem Kühlmittelkühler bestehende Kühlergruppe motorfest ausgebildet ist. Die motorfeste Anordnung der Kühlergruppe erlaubt kleine Abstände zwischen den Bauteilen, da Relativbewegungen nicht berücksichtigt werden müssen. Das Kühlsystem kann dadurch sehr kompakt gehalten werden. Weiters kann auf den Einsatz von flexiblen Elementen in den Ladeluftleitungen weitgehend verzichtet werden, was sich vorteilhaft auf die Kosten und die Wartungsintensität auswirkt. Insbesondere kann auf flexible Leitungselemente, wie beispielsweise Gummileitungen mit geringer Dauerfestigkeit verzichtet werden. Die Aufhängung der Kühlergruppe in einem Fahrzeugrahmen über Gummilager entfällt. Die motorfeste Kühlergruppe wird mit der Montage im Fahrzeug gemeinsam mit der Brennkraftmaschine und dem Getriebe in eine elastische Antriebseinheitsaufhängung gehoben. Durch den Entfall der flexiblen Elemente in den Ladeluftleitungen gibt es darüber hinaus keine Gasreaktionskräfte auf die einzelnen Kühler und Leitungen mehr. Somit können separate Abstützelemente oder dergleichen entfallen.

Genauso kann aber auch vorgesehen sein, dass die Kühlergruppe fahrzeugrahmenfest ausgebildet ist. In diesem Fall ist es notwendig, dass in der Ladeluftleitung zwischen erstem Verdichter, erstem Ladeluftkühler, zweitem Verdichter und zweiten Ladeluftkühler und einem Einlasssammler elastische Leitungselemente angeordnet sind.

In weiterer Ausführung der Erfindung ist vorgesehen, dass der zweite Abgasturbolader, vorzugsweise abgasseitig, geregelt umgehbar ist. Durch die Umgehbarkeit des zweiten Verdichters - dem Hochdruckverdichter - mittels der Bypassleitung und zumindest einem oder mehreren Ventilen bei hohen Abgasmengen - etwa bei hohen Lasten und Motordrehzahlen - ist es möglich, beide Abgasturbolader in optimalen Betriebsbereichen zu betreiben, was einen erheblichen Wirkungsgradvorteil gegenüber ungeregelten seriellen Aufladesystemen bringt. Die kleine Hochdruckturbinen-Verdichterkombination dreht auch schon bei geringen Abgasenergien rasch hoch. Dadurch wird ein sehr rasches Ansprechverhalten der Brennkraftmaschine erreicht.

Zur Erzeugung des Kühlluftstromes ist ein vorzugsweise axialer Lüfter vorgesehen, der zur Regelung des Kühlluftbedarfes über eine schaltbare Kupplung angetrieben ist. Dadurch kann bei geringem Kühlluftbedarf die Antriebsleistung eingespart werden. Vorzugsweise weist die Kupplung ein Visko-Thermo-Element auf. Alternativ dazu kann auch vorgesehen sein, dass die Kupplung extern über zumindest einen Kühllufttemperaturgeber und eine elektronische Steuereinheit angesteuert wird.

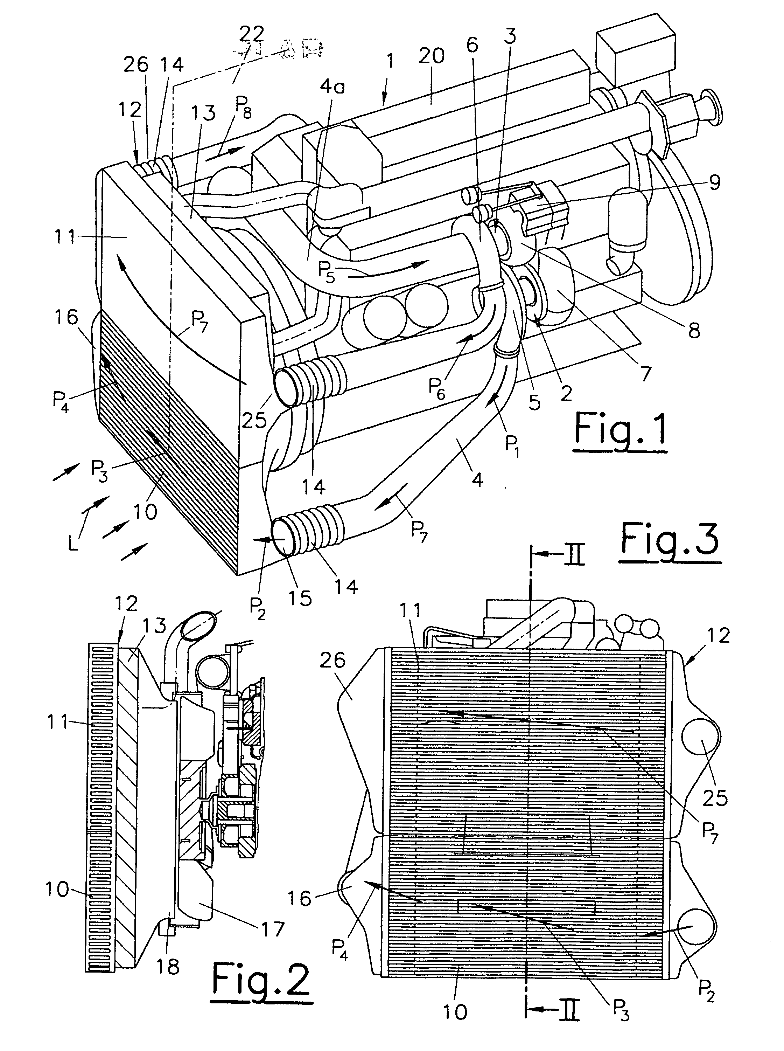

Die Erfindung wird im Folgenden anhand der Figuren näher erläutert. Es zeigen
- Fig. 1: die erfindungsgemäße Brennkraftmaschine in einer Ausführungsvariante in einer Schrägansicht,
- Fig. 2: die Brennkraftmaschine in einem Schnitt gemäß der Linie II-II in Fig. 3,
- Fig. 3: die Brennkraftmaschine in einer Stirnansicht,

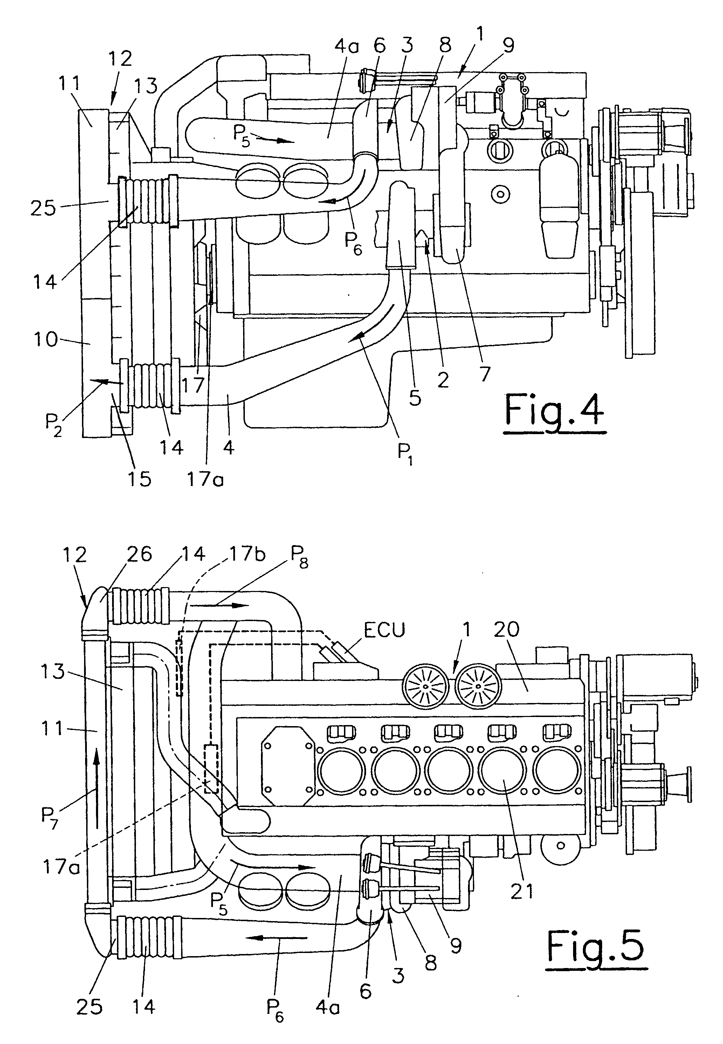

- Fig. 4: die Brennkraftmaschine in einer Seitenansicht,
- Fig. 5: die Brennkraftmaschine in einer Draufsicht,
- Fig. 6: die erfindungsgemäße Brennkraftmaschine in einer zweiten Ausführungsvariante in einer Schrägansicht,
- Fig. 7: die Brennkraftmaschine in einem Schnitt gemäß der Linie VII-VII in Fig. 8,
- Fig. 8: die Brennkraftmaschine in einer Vorderansicht.

Funktionsgleiche Bauteile sind in den Ausführungsvarianten mit gleichen Bezugszeichen versehen.

Die Brennkraftmaschine 1 weist eine zweistufige Aufladung mit einem ersten Abgasturbolader 2 und einem zweiten Abgasturbolader 3 auf. In der Ladeluftleitung 4 ist der erste Verdichter 5 des ersten Abgasturboladers 2 und stromabwärts dieses der zweite Verdichter 6 des zweiten Abgasturboladers 3 angeordnet. Mit Bezugzeichen 7 ist die erste Abgasturbine des ersten Abgasturboladers 2 und mit Bezugszeichen 8 die zweite Abgasturbine des zweiten Abgasturboladers 3 bezeichnet. Der erststufige erste Abgasturbolader ist großvolumig ausgeführt, der zweistufige zweite Abgasturbolader 3 kleinvolumig ausgeführt.

Die zweite Abgasturbine 8 des zweiten Abgasturboladers 3 kann mittels einer zumindest ein Ventil aufweisenden Bypasseinrichtung 9 umgangen werden.

Zwischen dem ersten Verdichter 5 und dem zweiten Verdichter 6 ist in der Ladeluftleitung 4 ein erster Ladeluftkühler 10 angeordnet. Ein weiterer, zweiter Ladeluftkühler 11 ist stromabwärts des zweiten Verdichters 6 vorgesehen. Die Ladeluftkühler 10, 11 sind Teil einer Kühlergruppe 12, welcher auch der Kühlmittelkühler 13 angehört. Der erste und der zweite Ladeluftkühler 10, 11 sind dabei - in der durch die Pfeile L angedeuteten Anströmrichtung der Luft betrachtet - stromaufwärts des Kühlmittelkühlers 13 angeordnet. Der zweite Ladeluftkühler 11 ist dabei über dem ersten Ladeluftkühler 10 positioniert. Dies ermöglicht eine sehr kompakte Bauweise.

Der in Bezug auf die Kühlluft L stromaufwärts des Kühlmittelkühlers 13 angeordnete, über eine schaltbare Kupplung 17a angetriebenen Lüfter 17 ist als Axiallüfter ausgeführt. Die schaltbare Kupplung 17a kann dabei ein Visko-Thermo-Element beinhalten und selbstregelnd ausgeführt sein. Alternativ dazu kann die Kupplung 17a extern über einen Kühllufttemperaturgeber 17b und eine Steuereinheit ECU gesteuert werden. Mit Bezugszeichen 18 ist das Lüftergehäuse bezeichnet.

In den Ausführungsbeispielen ist die Kühlergruppe 12 fahrzeugfest ausgeführt, wodurch jeweils zwischen den Abschnitten der Ladeluftleitung 4 zwischen erstem Verdichter 5 und erstem Ladeluftkühler 10, zweitem Verdichter 6, zweitem Ladeluftkühler 11 und einem Einlasssammler 20 elastische Elemente 14 vorgesehen sind.

Die von einem nicht weiter dargestellten Luftfilter kommende Ladeluft gelangt in den ersten Verdichter 5 der ersten Abgasturbine 2, wird hier komprimiert und entsprechend dem Pfeil P₁ zum ersten Ladeluftkühler 10 geführt. Im ersten Ladeluftkühler 10 strömt die Ladeluft entsprechend den Pfeilen P₂,P₃,P₄ vom Kühlereintritt 15 zum Kühleraustritt 16 und wird dabei zwischengekühlt. Danach gelangt die Ladeluft entsprechend dem Pfeil P₅ zum zweiten Verdichter 6 des zweiten Abgasturboladers 3. Im als Hochdruckstufe ausgebildeten zweiten Verdichter 6 wird die Ladeluft weiter komprimiert und entsprechend dem Pfeil P₆ zum zweiten Ladeluftkühler 11 geführt, wo eine weitere Temperaturabsenkung der Ladeluft stattfindet. Die Ladeluft durchströmt den zweiten Ladeluftkühler 11 vom zweiten Kühlereintritt 25 zum zweiten Kühleraustritt 26 in Querrichtung entsprechend dem Pfeil P₇ und verlässt den zweiten Ladeluftkühler 11 auf der dem zweiten Ladelufteintritt 25 gegenüberliegenden Seite der Hochebene 22. Die den zweiten Ladeluftkühler 11 verlassende Ladeluft P₈ wird zum Einlasssammler 20 und weiter zu den einzelnen Zylindern 21 geführt.

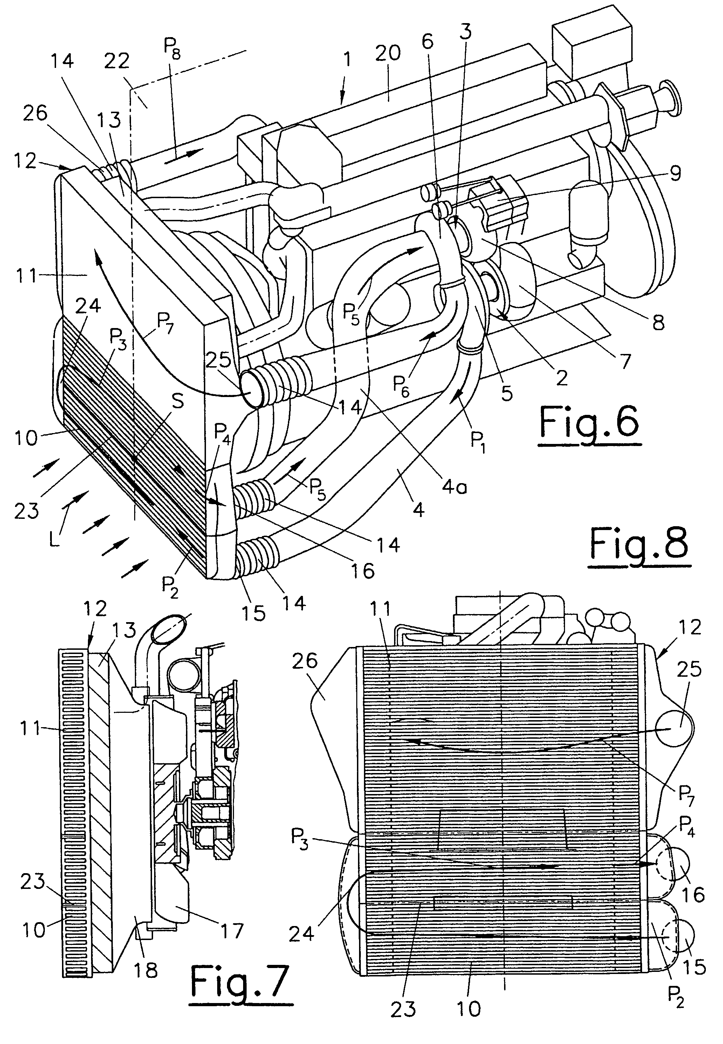

Bei dem in den Fig. 6 bis 8 dargestellten Ausführungsbeispiel sind Kühlereintritt 15 und Kühleraustritt 16 des ersten Ladeluftkühlers 10 auf der selben Seite einer durch den Schwerpunkt S des Ladeluftkühlers 10 verlaufenden, in Richtung der Anströmung der Kühlluft L ausgerichteten Hochebene 22, angeordnet. Die in den ersten Ladeluftkühler 10 gemäß dem Pfeil P₂ eintretende und gemäß dem Pfeil P₄ austretende Ladeluft ist - bis auf einen Durchlass 24 auf der dem Kühlereintritt 15 und dem Kühleraustritt 16 gegenüberliebenden Seite - voneinander getrennt. Dadurch wird der erste Ladeluftkühler 10 U-förmig in Querrichtung von der Ladeluft durchströmt, wie mit dem Pfeil P₃ angedeutet ist. Dies hat den Vorteil, dass die Ladeluftleitung 4a zwischen dem ersten Ladeluftkühler 10 und dem zweiten Verdichter 6 kurz gehalten werden kann.

## Patentansprüche

1. Kühlsystem für eine Brennkraftmaschine (1) mit zweistufiger Aufladung, mit einer Ladeluftleitung (4), in welcher ein erster Verdichter (5) eines ersten Abgasturboladers (2) und stromabwärts dieses ein zweiter Verdichter (6) eines zweiten Abgasturboladers (3) angeordnet ist, wobei zwischen dem ersten und dem zweiten Verdichter (5, 6) ein erster Ladeluftkühler (10) und stromabwärts des zweiten Verdichters (6) ein zweiter Ladeluftkühler (11) angeordnet ist, **dadurch gekennzeichnet, dass** zumindest einer der beiden Ladeluftkühler (10, 11), in Anströmrichtung der Kühlluft (L) betrachtet, stromaufwärts eines Kühlmittelkühlers (13) angeordnet ist, und dass der zweite Ladeluftkühler (11) über oder neben dem ersten Ladeluftkühler (10) angeordnet ist.

2. Kühlsystem nach Anspruch 1, **dadurch gekennzeichnet, dass** bei zumindest einem Ladeluftkühler (10, 11), vorzugsweise beim ersten Ladeluftkühler (10), Kühlereintritt (15) und Kühleraustritt (16) auf der selben Seite - bezogen auf eine Richtung der anströmenden Kühlluft (L) durch den Schwerpunkt (S) des Ladeluftkühlers (10) verlaufende Hochebene (22) - angeordnet sind.

3. Kühlsystem nach Anspruch 1 oder 2, **dadurch gekennzeichnet, dass** zumindest ein Ladeluftkühler (10, 11), vorzugsweise der erste Ladeluftkühler (10), eine vorzugsweise durch den Schwerpunkt (S) verlaufende Trennwand (23) zwischen eintretendem und austretendem Ladeluftstrom (P_{2,} P₄) aufweist, so dass ein im Wesentlichen U-förmiger Strömungsweg (P₃) für die den Ladeluftkühler durchströmende Ladeluft gebildet ist.

4. Kühlsystem nach einem der Ansprüche 1 bis 3, **dadurch gekennzeichnet, dass** die aus erstem und zweitem Ladeluftkühler (10, 11) und dem Kühlmittelkühler (13) bestehende Kühlergruppe (12) motorfest ausgebildet ist.

5. Kühlsystem nach einem der Ansprüche 1 bis 3, **dadurch gekennzeichnet, dass** die Kühlergruppe (12) fahrzeugrahmenfest ausgebildet ist.

6. Kühlsystem nach einem der Ansprüche 1 bis 5, **dadurch gekennzeichnet, dass** in der Ladeluftleitung (4) zwischen erstem Verdichter (5), erstem Ladeluftkühler (10), zweitem Verdichter (6), zweiten Ladeluftkühler (11) und einem Einlasssammler (20) elastische Leitungselemente (14) angeordnet sind.

7. Kühlsystem nach einem der Ansprüche 1 bis 6, **dadurch gekennzeichnet, dass** der zweite Abgasturbolader (3), vorzugsweise abgasseitig, geregelt umgehbar ist.

8. Kühlsystem nach einem der Ansprüche 1 bis 7 mit einem Lüfter (17) zur Erzeugung eines Kühlluftstroms (2), **dadurch gekennzeichnet, dass** der vorzugsweise axiale Lüfter (17) über eine schaltbare Kupplung (17a) angetrieben ist.

9. Kühlsystem nach Anspruch 8, **dadurch gekennzeichnet, dass** die schaltbare Kupplung (17a) ein Visko-Thermo-Element aufweist.

10. Kühlsystem nach Anspruch 8, **dadurch gekennzeichnet, dass** die Kupplung (17a) extern über zumindest einen Kühllufttemperaturgeber (17b) und eine elektronische Steuereinheit (ECU) ansteuerbar ist.

## Claims

1. Cooling system for an internal combustion engine (1) with two-stage supercharging, including a charge-air line (4) in which are provided a first compressor (5) of a first turbocharger (2) and a second compressor (6) of a second turbocharger (3) downstream of the former, a first charge-air cooler (10) being provided between first and second compressor (5,6), and a second charge-air cooler (11) downstream of the second compressor (6), **wherein** at least one of the two charge-air coolers (10,11) is disposed upstream of the coolant cooler (13) in flow direction of the cooling air (L), and the second charge-air cooler (11) is disposed above or beside the first charge-air cooler (10).

2. Cooling system according to claim 1, **wherein** the inlet (15) and outlet (16) of at least one charge-air cooler (10,11), and preferably the first charge-air cooler (10), are provided on one and the same side relative to a vertical plane (22) extending through the center of gravity (S) of the charge-air cooler (10) in the flow direction of the cooling air (L).

3. Cooling system according to claim 1 or 2, **wherein** at least one charge-air cooler (10,11), and preferably the first charge-air cooler (10), is provided with a separating wall (23) through the center of gravity (S), which acts as a partition between incoming and outgoing charge-air stream (P₂,P₄), so that an essentially U-shaped flow path (P₃) is obtained for the charge air flowing through the charge-air cooler.

4. Cooling system according to any of claims 1 to 3, **wherein** the cooling assembly (12) comprising first and second charge-air coolers (10,11) and the coolant cooler (13) is rigidly attached to the engine.

5. Cooling system according to any of claims 1 to 3, **wherein** the cooling assembly (12) is rigidly attached to the vehicle frame.

6. Cooling system according to claim 1 to 5, **wherein** flexible hose elements (14) are provided in the charge-air line (4) between first compressor (5), first charge-air cooler (10), second compressor (6), second charge-air cooler (11), and an intake manifold (20).

7. Cooling system according to any of claims 1 to 6, **wherein** the second turbocharger (3) is bypassed in a controlled manner, preferably at the exhaust end.

8. Cooling system according to any of claims 1 to 7, including a fan (17) for generation of a cooling air stream (L), **wherein** the a preferably axial-flow type fan (17) is driven by a switchable coupling (17a).

9. Cooling system according to claim 8, **wherein** the switchable coupling (17a) is provided with a visco-thermoelement.

10. Cooling system according to claim 8, **wherein** the coupling (17a) is controlled externally via at least one cooling- air temperature sensor (17b) and an electronic control unit (ECU).

## Revendications

1. Système de refroidissement pour un moteur à combustion interne (1) à suralimentation à deux étages comprenant une conduite d'air de suralimentation (4) équipée d'un premier compresseur (5), d'un premier turbocompresseur de gaz d'échappement (2) et en aval de celui-ci un second compresseur (6) d'un second turbocompresseur de gaz d'échappement (3), et un premier radiateur d'air de suralimentation (10) entre le premier et le second compresseur (5, 6) et en aval du second compresseur (6), un second radiateur d'air de suralimentation (11),
**caractérisé en ce qu'**
au moins l'un des deux radiateurs d'air de suralimentation (10, 11), vu dans la direction de passage de l'air de refroidissement (L), est installé en amont d'un radiateur d'agent de refroidissement (13) et
le second radiateur d'air de suralimentation (11) est installé au-dessus ou à côté du premier radiateur d'air de suralimentation (10).

2. Système de refroidissement selon la revendication 1,
**caractérisé en ce que**
pour au moins un radiateur d'air de suralimentation (10, 11), de préférence pour le premier radiateur d'air de suralimentation (10), l'entrée de refroidissement (15) et la sortie de refroidissement (16) sont situées du même côté par rapport à la direction de passage d'air de refroidissement (L), direction passant par le plan vertical (22) passant par le centre de gravité (S) du radiateur d'air de suralimentation (10).

3. Système de refroidissement selon la revendication 1 ou 2,
**caractérisé en ce qu'**
au moins un radiateur d'air de suralimentation (10, 11), et de préférence le premier radiateur (10), comporte une cloison (23) entre la veine d'air de suralimentation d'entrée et celle de sortie (P₂, P₄), cloison passant de préférence par le centre de gravité (S) pour former un chemin d'écoulement (P₃) essentiellement en forme de U pour l'air de suralimentation passant sur le radiateur d'air de suralimentation.

4. Système de refroidissement selon l'une des revendications 1 à 3,
**caractérisé en ce que**
l'ensemble de radiateurs (12) formé du premier et du second radiateur de suralimentation (10, 11) et du radiateur de liquide de refroidissement (13) est solidaire du moteur.

5. Système de refroidissement selon l'une des revendications 1 à 3,
**caractérisé en ce que**
l'ensemble de radiateurs (12) est solidaire du châssis du véhicule.

6. Système de refroidissement selon l'une des revendications 1 à 5,
**caractérisé par**
des éléments de conduite élastiques (14) dans la conduite d'air de suralimentation (4) entre le premier compresseur (5), le premier radiateur d'air de suralimentation (10), le second compresseur (6), le second radiateur d'air de suralimentation (11) et un collecteur d'admission (20).

7. Système de refroidissement selon l'une des revendications 1 à 6,
**caractérisé en ce que**
le second turbocompresseur des gaz d'échappement (3), régulé de préférence du côté des gaz d'échappement, peut être contourné.

8. Système de refroidissement selon l'une des revendications 1 à 7, comprenant un ventilateur (17) pour créer une veine d'air de refroidissement (L),
**caractérisé en ce que**
le ventilateur (17), de préférence axial, est entraîné par un embrayage (17a) débrayable.

9. Système de refroidissement selon la revendication 8,
**caractérisé en ce que**
l'embrayage débrayable (17a) comporte un élément à thermoviscosité.

10. Système de refroidissement selon la revendication 8,
**caractérisé en ce que**
l'embrayage (17a) est commandé de manière externe par au moins un capteur de température d'air de refroidissement (17b) et une unité de commande électronique (ECU).
